# EUROPÄISCHE PATENTSCHRIFT

(11) **EP 3 618 669 B1**
(45) Veröffentlichungstag und Bekanntmachung des Hinweises auf die Patenterteilung: **18.08.2021**
(21) Anmeldenummer: 18727654.8
(22) Anmeldetag: 03.05.2018
(51) Int. Cl.: A47C 27/08, B60R 9/04, F04B 45/02

(54) **FLUIDAUFNAHMEANORDNUNG UND DACHGEPÄCKTRÄGER MIT EINER FLUIDAUFNAHMEANORDNUNG**
FLUID RECEIVING ARRANGEMENT AND ROOF RACK COMPRISING A FLUID RECEIVING ARRANGEMENT
SYSTÈME DE RÉCEPTION DE FLUIDE ET GALERIE DE TOIT DOTÉE D'UN SYSTÈME DE RÉCEPTION DE FLUIDE

(30) Priorität: 04.05.2017 DE 102017207534; 05.07.2017 DE 102017211454
(43) Veröffentlichungstag der Anmeldung: 11.03.2020
(73) Patentinhaber: Shred Rack GmbH, 83313 Siegsdorf (DE)
(72) Erfinder: DECKERT, Tobi, 83313 Siegsdorf (DE)
(74) Vertreter: Seifert, Ruth
(86) Internationale Anmeldenummer: PCT/DE2018/100423
(87) Internationale Veröffentlichungsnummer: WO 2018/202252

(56) Entgegenhaltungen:
- WO-A1-84/04074
- WO-A1-98/34813
- DE-A1- 4 034 593
- US-A- 3 133 696
- US-A- 5 632 055
- US-A1- 2014 209 184

## Beschreibung

Vorliegende Erfindung betrifft eine Fluidaufnahmeanordnung gemäß dem Oberbegriff von Patentanspruch 1, eine Fluidaufnahmeanordnung gemäß dem Oberbegriff von Patentanspruch 2, eine Pumpvorrichtung einer solchen Fluidaufnahmeanordnung, sowie ein Herstellungsverfahren für derartige Fluidaufnahmeanordnungen, und einen Dachgepäckträger, der als Tragelement oder Auflageelement eine derartige Fluidaufnahmeanordnung oder Komponente einer derartigen Fluidaufnahmeanordnung aufweist.

Aus dem Stand der Technik sind Dachgepäckträger bekannt, bei denen als Trag- bzw. Auflageelement aufblasbare Luftkammern fungieren, die ähnlich einer Luftmatratze, wie beispielsweise in US3133696A, US2014/209184A1 oder US5632055A beschrieben, oder einem Schlauchboot mit Luft befüllt werden und mittels eines Gurtsystems um das Autodach herumgespannt werden, so dass das Auflageelement auf dem Autodach zu liegen kommt. Um diese Luftkammern mit Luft zu befüllen, wird üblicherweise ein herkömmliches Ventil verwendet, über das die Luftkammern mittels Lungenkraft oder mittels einer Pumpe, die mit dem Ventil verbunden wird, aufgeblasen werden.

Nachteilig bei diesen aus dem Stand der Technik bekannten Systemen ist jedoch, dass eine Person ein eventuell verschmutztes Ventil in den Mund nehmen muss, um die Luftkammer aufzupusten oder immer eine Luftpumpe mit sich führen muss, um Luft in die Luftkammer einzupumpen. Die integrierten Pumpelemente, die bezüglich Luftmatratzen in den Dokumenten US3133696A, US2014/209184A1 oder DE9308870U1 beschrieben sind, offenbaren zwar Möglichkeiten, die Luftmatratzen anders mit Luft zu befüllen, die integrierten Pumpenelemente und insbesondere die in den Pumpenelementen vorhanden Füllkörper vergrößern jedoch das Packmass und das Gewicht der Luftmatratze und sind somit bei einer klein zusammenzulegenden Fluidaufnahmeanordnung nicht einsetzbar.

Aufgabe vorliegender Erfindung ist es deshalb, eine Fluidaufnahmeanordnung zu schaffen, bei der diese Nachteile des Stands der Technik verbessert sind.

Diese Aufgabe wird durch eine Fluidaufnahmeanordnung gemäß Anspruch 1 eine Fluidaufnahmeanordnung gemäß Anspruch 2, eine Pumpvorrichtung einer derartigen Fluidaufnahmeanordnung gemäß Patentanspruch 10, ein Herstellungsverfahren für eine derartiges Fluidaufnahmeanordnung gemäß Patentanspruch 11 und einen Dachgepäckträger gemäß Patentanspruch 12 gelöst.

Im Folgenden wird eine Fluidaufnahmeanordnung vorgeschlagen, die eine erste Fluidaufnahmekammer aufweist, die zu einer Umgebung bis auf einen Fluideinlasskanal, über den die erste Fluidaufnahmekammer mit Fluid beaufschlagbar ist, abgeschlossen ist, wobei der Fluideinlasskanal einen geringeren Durchmesser aufweist als die erste Fluidaufnahmekammer.

Um eine besonders einfache Befüllung der ersten Fluidaufnahmekammer zu erreichen ist der Fluideinlasskanal nicht über ein Ventil abgeschlossen, an das eine Pumpe oder ähnliches angebracht wird, sondern ist fluidisch mit einer zweiten Fluidaufnahmekammer verbunden, so dass ein in der zweiten Fluidaufnahmekammer befindliches Fluid über den Fluideinlasskanal von der zweiten Fluidaufnahmekammer in die erste Fluidaufnahmekammer überführt werden kann. Dabei sind die erste Fluidaufnahmekammer, der Fluideinlasskanal und die zweite Fluidaufnahmekammer als integrales Element ausgebildet. Durch diese Ausgestaltung kann eine Fluidaufnahmeanordnung bereitgestellt werden, bei der der Pumpmechanismus für das Fluid in das Fluidaufnahmeanordnung integriert ist, so dass weder ein zusätzliches Element in Form einer Pumpe bereitgestellt werden muss, noch ein unhygienisches Aufpusten der Fluidaufnahmeanordnung erfolgen muss.

Weiterhin ist die zweite Fluidaufnahmekammer faltbar oder rollbar ausgestaltet, so dass ein möglichst geringes Packmaß erreicht werden kann. Um zu erreichen, dass Luft ungehindert in die zweite Fluidaufnahmekammer einströmen kann, auch wenn man eine Öffnung der zweiten Fluidaufnahmekammer zu einer Außenumgebung nicht manuell offen hält, und um gleichzeitig zu erreichen, dass sich das Packmaß der Fluidaufnahmeanordnung nicht unnötig erhöht, wie es beispielsweise durch die Füllkörper im Stand der Technik geschehen würde, ist an der zweiten Fluidaufnahmekammer zumindest ein Versteifungselement angeordnet ist, das vorzugsweise umfänglich um einen Körper und/oder um einen Öffnungsrand der zweiten Fluidaufnahmekammer herum angeordnet ist, so dass im unbelasteten Zustand die zweite Fluidaufnahmekammer zur Umgebung vollständig geöffnet ist. Dadurch kann ein umgebendes Fluid, beispielsweise Luft ungehindert in der zweiten Fluidaufnahmekammer aufgenommen werden. Dieses Versteifungselement füllt die zweite Fluidaufnahmekammer somit nicht, wie im Stand der Technik, vollständig aus oder ist in die Fluidaufnahmekammer selbst eingebracht.

Eine derartige Fluidaufnahmeanordnung hat den Vorteil, dass sie platzsparend verstaut werden kann, wenn sie nicht gebraucht wird, und schnell und einfach, ohne Verwendung weiterer Hilfsmittel, in ihren Verwendungszustand gebracht werden kann.

Gemäß einem weiteren bevorzugten Ausführungsbeispiel ist das Versteifungselement als mehrere Einzelelemente ausgebildet ist, die sich um die zweite Fluidaufnahmekammer herum erstrecken, und/oder das Versteifungselement ist als ein sich kontinuierlich um die zweite Fluidaufnahmekammer herum erstreckende Spirale ausgebildet. Dadurch kann die zweite Fluidaufnahmekammer zur Umgebung hin im unbelasteten Zustand offengehalten werden, wobei gleichzeitig durch die Ausbildung als sich um die Fluidaufnahmekammer herum erstreckenden Einzelelemente ein Zusammenpacken bzw. ein Zusammenrollen der Fluidaufnahmeanordnung nicht behindert wird und damit keine Vergrößerung des Packmaßes eintritt.

Wie oben erwähnt, ist die zweite Fluidaufnahmekammer faltbar oder zusammenrollbar. Das bedeutet jedoch für das eingesetzte versteifende Material gleichzeitig, dass es so ausgebildet sein muss, dass die Faltbarkeit der Fluidaufnahmekammer nicht behindert ist. Dies wird besonders einfach durch die oben genannten Einzelelemente erreicht. Durch die Faltbarkeit bzw. Zusammenrollbarkeit der zweiten Fluidaufnahmekammer kann diese nach dem Befüllen der ersten Fluidaufnahmekammer platzsparend verstaut werden.

Alternativ kann die Fluidaufnahmeanordnung eine erste Fluidaufnahmekammer aufweisen, die nicht integral, sondern lösbar mit einer Pumpvorrichtung verbunden ist. Dabei umfasst diese Pumpvorrichtung den Fluideinlasskanal und die zweite Fluidaufnahmekammer, und ist ansonsten genau gleich zu der oben genannten Fluidaufnahmeanordnung aufgebaut.

Somit weist der Fluideinlasskanal von beiden alternativen Fluidaufnahmeanordnungen jeweils einen ersten Kanalabschnitt mit konstantem Durchmesser, und einen zweiten Kanalabschnitt mit einem variierenden Durchmesser, der sich vorzugsweise in Richtung der zweiten Fluidaufnahmekammer vergrößert, auf. Durch diese Ausgestaltung des Fluideinlasskanals kann sichergestellt werden, dass das Fluid leicht aus der zweiten Fluidaufnahmekammer in den Fluideinlasskanal überführt werden kann, aber der rückwärtige Weg von der ersten Fluidaufnahmekammer in den Fluideinlasskanal erschwert ist. Dabei wirkt die Form des Fluideinlasskanals wie ein Rückschlagventil.

Die Rückschlagventilwirkung wird insbesondere, wie ein weiteres bevorzugtes Ausführungsbeispiel der beiden alternativen Fluidaufnahmeanordnungen zeigt, jeweils über den Durchmesser und/oder eine Länge des ersten Kanalabschnitts bestimmt, der dazu derart dimensioniert ist, dass bei Erreichen eines vorbestimmten Fluiddruckunterschieds des Fluids in der ersten Fluidaufnahmekammer in Bezug zu einem Fluid in der Umgebung und/oder in der zweiten Fluidaufnahmekammer ein Rückströmen des Fluids aus der ersten Fluidaufnahmekammer in die zweite Fluidaufnahmekammer verhindert ist.

Dazu können vorzugsweise die beiden alternativen Fluidaufnahmeanordnungen jeweils in einem Übergangsbereich von dem ersten Kanalabschnitt in die erste Fluidaufnahmekammer, eine bestimmte Geometrie aufweist, die ein Rückströmen des Fluids aus der ersten Fluidaufnahmekammer in die zweite Fluidaufnahmekammer verhindert ist.

Optional kann der Übergangsbereich als ein dritter Kanalabschnitt des Fluideinlasskanals ausgebildet sein, der sich in Richtung der ersten Fluidaufnahmekammer erstreckt und ebenfalls beispielsweise einen variierenden Durchmesser, insbesondere sich vergrößernden Durchmesser, aufweist.

Dabei kann sich vorzugsweise der vergrößernde Durchmesser des zweiten bzw. dritten Kanalabschnitts bis auf einen maximalen Durchmesser der ersten bzw. zweiten Fluidaufnahmekammer vergrößern.

Gemäß einem weiteren vorteilhaften Ausführungsbeispiel der beiden alternativen Fluidaufnahmeanordnungen, weist die erste Fluidaufnahmekammer jeweils in einem Bereich des Fluideinlasskanals mindesten eine seitliche am Fluideinlasskanal angeordnete Fluidaufnahmetasche auf, die derart ausgebildet ist, dass ein in der Tasche aufgenommenes Fluid einen den Fluideinlasskanal verschließenden Druck auf den Fluideinlasskanal ausübt.

Besonders bevorzugt ist ein Ausführungsbeispiel der beiden alternativen Fluidaufnahmeanordnungen, bei dem jeweils die Geometrie des Übergangsbereichs des Fluideinlasskanals in die erste Fluidaufnahmekammer mindestens eine seitlich des Fluideinlasskanals angeordnete Fluidaufnahmetaschen aufweist, die sich vorzugsweise zumindest teilweise entlang des Fluideinlasskanals erstrecken und aufgrund des in den Fluidaufnahmetaschen befindlichen Fluids einen Fluiddruck von außen auf den Fluideinlasskanal ausübt, so dass die Rückschlagventilfunktion des Fluideinlasskanals vergrößert wird.

Allgemein gesagt, ist ein Ausführungsbeispiel der beiden alternativen Fluidaufnahmeanordnungen bevorzugt, bei dem jeweils der Durchmesser und/oder eine Länge des ersten Kanalabschnitts und/oder ein Öffnungswinkel des sich vergrößernden Durchmessers des zweiten und/oder dritten Kanalabschnitts und/oder die Geometrie des Übergangsbereichs derart dimensioniert ist, dass bei Erreichen eines vorbestimmten Fluiddruckunterschieds des Fluids in der ersten Fluidaufnahmekammer zu einem Fluid in der zweiten Fluidaufnahmekammer oder einem Fluiddruck eines Umgebungsfluids ein Rückströmen des Fluids aus der ersten Fluidaufnahmekammer in die zweite Fluidaufnahmekammer verhindert ist.

Gemäß einem weiteren bevorzugten Ausführungsbeispiel der beiden alternativen Fluidaufnahmeanordnungen, ist die Fluidaufnahmeanordnung und/oder ihre Komponenten schlauchartig. Dabei kann unter einem schlauchartigen Element ein Element verstanden werden das aus einem Schlauchmaterial gefertigt ist, oder aber auch ein Element, bei dem das Material in eine Schlauchform gebracht wird, beispielsweise durch Zusammenkleben von zwei länglichen Teilen.

Dabei ist insbesondere bevorzugt, wenn bei den beiden alternativen Fluidaufnahmeanordnungen die zweite Fluidaufnahmekammer schlauchartig ausgebildet ist und an ihrer einen Seite integral in den Fluideinlass übergeht, während sie an ihrer anderen Seite eine Öffnung zur Umgebung hin aufweist, über die ein in der Umgebung vorhandenes Fluid in die zweite Fluidaufnahmekammer aufnehmbar ist. Dadurch kann auf jede Art von zusätzlichem Fluidbereitstellungselement verzichtet werden.

Gemäß einem weiteren bevorzugten Ausführungsbeispiel der beiden alternativen Fluidaufnahmeanordnungen, erstreckt sich jeweils die Öffnung der zweiten Fluidaufnahmekammer über einen gesamten Querschnitt der zweiten Fluidaufnahmekammer. Dadurch kann die Fluidaufnahme in der Kammer erleichtert werden. Weiterhin ist es möglich, dass sich der Querschnitt der Kammer vom Fluideinlasskanal in Richtung der Öffnung, beispielsweise konisch, vergrößert, so dass die Fluidaufnahme in der Fluidaufnahmekammer maximiert ist.

Weiterhin ist bevorzugt, wenn die jeweilige Fluidaufnahmeanordnung aus einem flexiblen Kunststoffmaterial, insbesondere aus einem Kunststofffolienschlauch, gefertigt ist. Durch die Flexibilität des Materials kann die jeweilige Fluidaufnahmeanordnung im entleerten Zustand, also wenn es nicht mit einem Fluid beaufschlagt ist, platzsparend zusammengepackt werden. Weiterhin stellt das flexible Material eine gewisse Elastizität bereit, die nötig, ist, damit beispielsweise die erste Fluidaufnahmekammer bei einer Erhöhung des Drucks in der Kammer nicht platzt. Eine Erhöhung des Drucks kann beispielsweise durch eine Erhöhung der Temperatur, beispielsweise aufgrund intensiver Sonneneinstrahlung, des in der Kammer befindlichen Fluids entstehen.

Damit die zweite Fluidaufnahmekammer trotz des verwendeten flexiblen Materials selbstständig, also ohne äußere Einwirkung geöffnet bleibt, ist wie oben erwähnt, an der Öffnung der zweiten Fluidaufnahmekammer ein das flexible Kunststoffmaterial versteifendes Material angeordnet. Dieses Versteifungsmaterial sorgt dafür, dass die Öffnung nicht in sich zusammenfällt. Dabei können vorzugsweise mehrere Versteifungselemente an der zweiten Fluidaufnahmekammer vorgesehen sein, die sich als Einzelelemente um die Kammer herumerstrecken oder beispielsweise in Form eine Spirale kontinuierlich das Material im Bereich der zweiten Fluidaufnahmekammer versteifen. Selbstverständlich wäre auch eine unterschiedliche Materialzusammensetzung im Bereich der zweiten Fluidaufnahmekammer möglich.

Gemäß einem weiteren bevorzugten Ausführungsbeispiel kann vorzugsweise die zweite Fluidaufnahmekammer in ihrem gefalteten oder zusammengerollten Zustand mittels beispielsweise eines Verschlusselements gesichert werden. Dabei sind als Verschlusselement beispielsweise ein Magnetverschluss oder ein Klettverschluss vorstellbar. Ebenfalls eine Möglichkeit des Verschließens der zweiten Fluidaufnahmekammer könnte über einen sogenannten Rollverschluss erfolgen, bei dem seitlich an der Öffnung der zweiten Fluidkammer Schnappverschlusselement angebracht sind, über die der zusammengerollte oder gefaltete Falz der zweiten Fluidaufnahmekammer an einem Aufrollen bzw. Entfalten gehindert wird.

Weiterhin kann allgemein an der zweiten Fluidaufnahmekammer mindestens ein Verschlusselement angeordnet sein, mit dem die Fluidaufnahmekammer verschließbar ist. Dadurch kann beispielsweise sichergestellt werden, dass auch bei nicht zusammengerolltem Rollverschluss ein weiterer Eintritt von Fluid in die zweite Fluidaufnahmekammer verhindert wird.

Besonders bevorzugt ist die Verwendung von Luft als Fluid. Da Luft immer und überall vorhanden ist und viele luftundurchlässige Materialien bereits bekannt sind, die einfach und auch umweltfreundlich zu handhaben sind, ist Luft als Fluid besonders einfach verwendbar.

Ein weiterer Aspekt der Erfindung betrifft eine Pumpvorrichtung einer Fluidaufnahmeanordnung zum Befüllen der ersten Fluidaufnahmekammer mit einem Fluid, wobei die Pumpvorrichtung selbst von der ersten Fluidkammer lösbar ausgebildet ist, und den Fluideinlasskanal und die fluidisch mit dem Fluideinlasskanal verbundene zweiten Fluidaufnahmekammer umfasst. Dabei sind nun nur der Fluideinlasskanal und die zweite Fluidaufnahmekammer als integrales Element ausgebildet, und der Fluideinlasskanal weist, wie oben bereits erwähnt, einen ersten Kanalabschnitt mit konstantem Durchmesser, und einen zweiten Kanalabschnitt mit einem sich unter einem Öffnungswinkel in Richtung der zweiten Fluidaufnahmekammer vergrößernden Durchmesser auf, wobei der Öffnungswinkel derart definiert ist, dass ein Fluid aus dem zweiten Kanalabschnitt in den ersten Kanalabschnitt leitbar ist.

Weiterhin ist dabei vorteilhaft, wenn der Fluideinlasskanal und/oder die zweite Fluidaufnahmekammer eines oder mehrerer der oben beschriebenen Merkmale aufweist.

Ein weiterer Aspekt vorliegender Erfindung betrifft ein Herstellverfahren für eine der oben beschriebenen Fluidaufnahmeanordnungen mit den Schritten:
- Bereitstellen eines schlauchartigen fluidundurchlässigen Materials, insbesondere eines Kunststofffolienschlauches, mit einem ersten zu einer Umgebung offenen Ende und einem zweiten, optional bereits zu der Umgebung geschlossenen, Ende;
- Ausstatten des schlauchartigen Materials an seinem offenen Ende mit mindestens einem Versteifungselement; und
- Ausbilden eines Fluideinlasskanals durch stoffschlüssiges Verbinden, insbesondere Verschweißens oder Verklebens, des Schlauches in einem Bereich zwischen dem zweiten, optional geschlossenen, Ende des Schlauches und dem ersten offenen Ende des Schlauches derart, dass der Fluideinlasskanal einen ersten Kanalabschnitt mit konstantem Durchmesser, und einen zweiten Kanalabschnitt mit einem sich in Richtung des ersten offenen Endes des Schlauches vergrößernden Durchmesser aufweist.

Ein weiterer Aspekt vorliegender Erfindung betrifft einen Dachgepäckträger für ein Fahrzeug mit zumindest einer Befestigungsvorrichtung für eine Befestigung des Dachgepäckträgers auf bzw. an einem Fahrzeugdach und zumindest einem Tragelement oder Auflageelement, das auf dem Fahrzeugdach anordenbar ist, wobei das Tragelement mindestens eine oben beschriebenes Fluidaufnahmeanordnung oder eine erste Fluidaufnahmekammer der alternativen oben beschriebenen Fluidaufnahmeanordnung aufweist. Ein derartiger Dachgepäckträger hat den Vorteil, dass er platzsparend verstaut werden kann, wenn er nicht gebraucht wird, und schnell und einfach, ohne Verwendung weiterer Hilfsmittel, in seinen Verwendungszustand gebracht werden kann. Dazu ist lediglich eine Fluidbefüllung der mindestens einen Fluidaufnahmeanordnung bzw. der ersten Fluidaufnahmekammer mittels der Pumpvorrichtung und ein Anordnen auf dem Fahrzeugdach und Sichern mittels der Befestigungsvorrichtung nötig.

Dabei ist insbesondere bevorzugt, wenn die Befestigungsvorrichtung direkt an dem Tragelement befestigt ist, in einen Innenraum des Fahrzeugs führbar ist und lösbar miteinander verbindbar ist, so dass das Tragelement auf dem Fahrzeugdach aufliegt.

So kann beispielsweise die Befestigungsvorrichtung als ein Gurtsystem ausgebildet sein, das vorzugsweise einen ersten Gurtbandabschnitt und einen zweiten Gurtbandabschnitt aufweist, die mittels eines Verschlusselements, insbesondere eines Schnappverschlusses, Klemmverschlusses oder Spannverschlusses miteinander verbindbar sind. Vorzugsweise kann dieses Verschlusselement weiterhin von einem Hüllenelement umgeben sein, das zum einen das Verschlusselement gegen einen Schmutzeintrag absichert und zum anderen als Aufnahme für einen nicht verwendeten Gurtbandabschnitt dient. Dabei ist das Hüllenelement vorzugsweise aus einem zumindest teilweise elastischen Material, wie beispielsweise Neopren, gefertigt. Dieses Hüllenelement dient auch dazu Kratzer an einem Lack eines Fahrzeugs zu vermeiden.

Weiterhin ist bevorzugt, wenn das Gurtsystem an einer Türöffnung in den Fahrzeuginnenraum führbar ist, wobei im Bereich einer an der Türöffnung angeordneten Dichtung ein Feuchtigkeitsstoppelement, insbesondere ein beschichtetes Gurtzusatzelement, angeordnet ist.

Dieses Feuchtigkeitsstoppelement kann beispielsweise als ein das Gurtband teilendes Element ausgebildet ist. Dadurch kann eine Feuchtigkeitstransportierende Kapillarwirkung verhindert werden, über die Feuchtigkeit in den Fahrzeuginnenraum gelangen könnte.

Gemäß einem weiteren bevorzugten Ausführungsbeispiel sind das Tragelement und die Fluidaufnahmeanordnung bzw. die erste Fluidaufnahmekammer integral als ein Element ausgebildet, wobei vorzugsweise das Tragelement aus einem fluidundurchlässigen Material gefertigt ist. Dadurch kann ein kostengünstiger und einfach zu verwendender Dachgepäckträger bereitgestellt werden.

Alternativ kann das Tragelement als mindestens eine in einer Umhüllung aufgenommene Fluidaufnahmeanordnung oder als mindestens eine in einer Umhüllung aufgenommene erste Fluidaufnahmekammer ausgebildet sein, wobei an der Umhüllung die Befestigungsvorrichtung angebracht ist. Diese Umhüllung sorgt für eine besonders robuste Ausgestaltung, da als Umhüllung auch fluiddurchlässige, aber bekanntermaßen sehr stabile Materialien, beispielsweise Kunststoffe, verwendet werden können. Vorzugsweise ist dabei die Umhüllung aus einem verstärkten Kunststoffmaterial, insbesondere aus einem Nylonmaterial oder Polyestermaterial, ausgebildet.

Gemäß einem weiteren bevorzugten Ausführungsbeispiel ist an dem Tragelement und/oder an der Umhüllung mindestens ein Befestigungselement, vorzugsweise mindestens eine Befestigungsschlaufe, ausgebildet, das für eine Befestigung der von dem Tragelement getragenen Ladung dient. Diese mindestens eine Befestigungsschlaufe kann beispielsweise über ein an dem Tragelement angebrachtes Gurtband ausgebildet sein.

Gemäß einem weiteren bevorzugten Ausführungsbeispiel ist die Umhüllung und/oder das Tragelement mit einem Verschlusselement, insbesondere einem Rollverschluss ausgestattet, der sicherstellt, dass die Fluidaufnahmeanordnung bzw. die erste Fluidaufnahmekammer auch bei großen Belastungen des Dachgepäckträgers sicher in der Umhüllung aufbewahrt ist. Ist das Tragelement integral aus Umhüllung und Fluidaufnahmeanordnung bzw. erster Fluidaufnahmekammer ausgebildet, sorgt der Rollverschluss, wie oben beschrieben, beispielsweise für ein sicheres Verschließen der zweiten bzw. ersten Fluidaufnahmekammer.

Gemäß einem weiteren bevorzugten Ausführungsbeispiel ist eine Gesamtlänge und/oder eine Auflagefläche des Tragelements anpassbar. Dazu ist an dem Tragelement und/oder an der Umhüllung, vorzugsweise an einer dem Verschlusselement gegenüberliegenden Seite, ein Halteelement vorgesehen, mit dem das Ende der Umhüllung bzw. das Ende des Tragelement an dem Tragelements, vorzugsweise an dem am Tragelement angebrachten Befestigungselement, befestigbar ist, indem eine Abknickung in dem Tragelement ausgebildet wird. Dadurch kann die Gesamtlänge des Tragelement verkürzt werden und die von dem Tragelement bereitgestellte Auflagefläche vergrößert werden. Dabei ist das mindestens eine am Tragelement angebrachte Befestigungselement und/oder das Halteelement vorzugsweise als eine das Tragelement umfänglich umschließende Schlaufe und/oder als ein Klettverschluss ausgebildet, der eine beliebige Verkürzung der Länge des Tragelements ermöglicht. Alternativ können an dem Tragelement auch diskrete Stellen vorgesehen sein, mit denen das Befestigungselement und/oder das Halteelement zusammenwirken kann.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert. Dabei sind die Ausführungsbeispiele rein exemplarischer Natur und sollen nicht den Schutzbereich der Anmeldung festlegen, dieser wird allein über die anhängigen Ansprüche definiert.

Es zeigen:
- Figur 1:: eine schematische Darstellung eines Dachgepäckträgers gemäß einem bevorzugten Ausführungsbeispiel vorliegender Erfindung;
- Figur 2:: eine Detailansicht eines Aspekts von Fig. 1;
- Figur 3:: eine schematische Darstellung eines bevorzugten Ausführungsbeispiels einer Fluidaufnahmeanordnung;
- Figur 4:: eine schematische Detaildarstellung eines zweiten Ausführungsbeispiels der Fluidaufnahmeanordnung; und
- Figur 5:: eine schematische Darstellung eines dritten Ausführungsbeispiels der Fluidaufnahmeanordnung.

Im Folgenden werden gleiche oder funktionell gleichwirkende Elemente mit denselben Bezugszeichen gekennzeichnet.

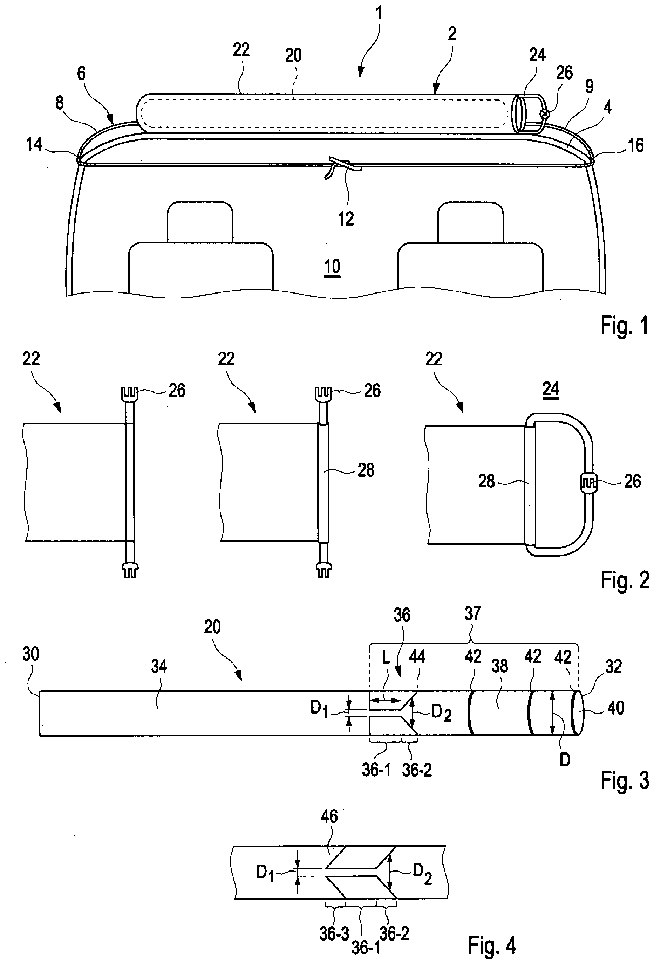

Figur 1 zeigt schematisch einen Dachgepäckträger 1 mit einem Tragelement oder Auflageelement 2, das auf einem Autodach 4 angeordnet ist. Der Dachgepäckträger 1 ist ein sogenannter aufblasbarer Dachgepäckträger, bei dem das Tragelement bzw. Auflageelement 2 bei Verwendung mit Luft, oder allgemein einem Fluid, gefüllt wird, auf dem Dach 4 des Fahrzeugs platziert wird, und mittels einer Befestigungsvorrichtung 6 an dem Fahrzeugdach 4 befestigt wird. Wird der Dachgepäckträger 1 nicht mehr benötigt, kann das Fluid bzw. die Luft abgelassen werden, und der Dachgepäckträger 1 platzsparend verstaut werden.

In dem in Figur 1 dargestellten Ausführungsbeispiel umfasst die Befestigungsvorrichtung 6 ein Gurtsystem, beispielsweise zwei Gurtbänder 8, 9, die an dem Tragelement oder Auflageelement 2 des Dachgepäckträgers 1 befestigt sind, um das Fahrzeugdach 4 herum in einen Innenraum 10 des Fahrzeugs geführt werden, und dort mittels eines Verschlusssystems 12 aneinander befestigt werden. Dabei kann das Verschlusssystem 12 beispielsweise ein Spanngurtverspannelement, sein, es ist jedoch auch möglich, Klemmgurte oder Schnallen zu verwenden. Ebenfalls ist möglich, dass das Verschlusssystem 12 nicht wie in Figur 1 dargestellt, im Fahrzeuginnenraum 10, sondern an beliebiger Stelle außerhalb des Fahrzeugs angeordnet ist. Um die Karosserie oder einen Fahrzeugdachhimmel nicht zu beschädigen, kann das Verschlusssystem 12 weiterhin in einem beispielsweise als Schutztasche ausgebildeten Hüllenelement (nicht dargestellt) aufgenommen werden, das zum einen das Verschlusssystem 12 vor Verschmutzung oder anderen schädlichen Umwelteinflüssen schützt, und gleichzeitig, insbesondere bei der Verwendung von Metallteilen am Verschlusssystem 12, einen empfindlichen Autodachlack vor Kratzern schützt. In dieser Schutztasche ist außerdem überschüssiges Gurtband aufnehmbar. Dabei kann die Schutztasche insbesondere aus einem leicht elastischen Material, wie beispielsweise Neopren hergestellt sein.

Üblicherweise wird das Gurtsystem über die Türdichtungen in den Fahrzeuginnenraum geführt. Um diese Türdichtungen nicht zu beschädigen, kann das Gurtsystem 6 an den Gurtbändern 8, 9 spezielle Abschnitte 14, 16 aufweisen, die die Dichtungen der Türöffnungen vor einer Beschädigung schützen. Dazu können die Abschnitte 14, 16 eine spezielle Beschichtung aufweisen, die besonders reibarm ist, so dass die empfindlichen Türdichtungen nicht beschädigt werden. Selbstverständlich kann die Beschichtung auch auf dem gesamten Gurtsystem 6 aufgebracht sein. Weiterhin ist möglich, dass die Abschnitte 14, 16 nicht als integrale Beschichtung der Gurtbänder ausgebildet sind, sondern als separat in das Gurtband eingesetzte Stücke ausgebildet sind. Dies hat den weiteren Vorteil, dass sich bei schlechtem Wetter, beispielsweise bei Regen, das Gurtband nicht mit Feuchtigkeit vollsaugen kann und über Kapillarwirkung die Feuchtigkeit in den Fahrzeuginnenraum 10 saugt. Somit können die separaten Abschnitte 14, 16 auch als Feuchtigkeitsstoppelemente ausgebildet sein. Dazu kann weiter vorgesehen sein, dass die Elemente 14, 16 eine außerhalb des Fahrzeugs angeordnete Tropfkante (nicht gezeigt) aufweisen, die ein Abtropfen des Wassers, bzw. der Feuchtigkeit, an der Außenseite des Fahrzeugs bereitstellt, so dass auch darüber ein Eintrag von Feuchtigkeit in den Fahrzeuginnenraum 10 verhindert ist.

Die Befestigungsvorrichtung 6 kann an beliebiger Stelle des Dachgepäckträgers 2 befestigt sein, es ist auch möglich, dass das Tragelement bzw. Auflageelement 2 des Dachgepäckträgers 1 über beispielsweise Schlaufen auf das Gurtband gefädelt ist, bzw. an ihm verschiebbar befestigt ist.

Das Tragelement 2 des Dachgepäckträgers 1 kann für die oben erwähnte Fluidaufnahme eine Fluidaufnahmeanordnung 20 oder nur eine erste Fluidaufnahmekammer 34 (siehe Fig. 3) aufweisen, oder als Fluidaufnahmeanordnung 20 bzw. erste Fluidaufnahmekammer 34 direkt ausgebildet sein. Die Fluidaufnahmeanordnung 20 bzw. die erste Fluidaufnahmekammer 34 ist in dem in Figur 1 dargestellten Ausführungsbeispiel als separate Fluidaufnahmeanordnung 20 bzw. erste Fluidaufnahmekammer 34 dargestellt, die von einer Umhüllung 22 aufgenommen wird. Die Umhüllung 22 ist wiederum, wie dargestellt und oben beschrieben, mit dem Gurt- bzw. Befestigungssystem 6 verbunden. Um eine sichere Aufnahme der Fluidaufnahmeanordnung 20 bzw. ersten Fluidaufnahmekammer 34 in der Umhüllung 22 zu gewährleisten, kann die Umhüllung 22 an ihrem einen Ende über einen mit einem Verschlusselement sicherbaren Rollverschluss 24 abgeschlossen sein. Unter einem Rollverschluss 24 wird hierbei verstanden, dass ein offenes Ende der Umhüllung ein paar Mal eingefaltet oder eingerollt wird, und dann die beim Einrollen entstehenden Falzenden miteinander über ein Verschlusselement verbunden werden. Dazu sind an der Öffnung der Umhüllung 22 beispielsweise diametral über den Durchmesser Schnappschnallen befestigt, die über den maximalen Durchmesser der Umhüllung 22 hinausstehen, so dass diese nach dem Aufwickeln miteinander verbunden werden können. Figur 2 zeigt schematisch das Rollverschlussprinzip mit den seitlich angeordneten Verschlusselementen 26 und dem Rollfalz 28.

Selbstverständlich ist dieser Rollverschluss auch dann einsetzbar, wenn die Fluidaufnahmeanordnung 20 bzw. erste Fluidaufnahmekammer 34 und die Umhüllung 22 als integrales Element ausgebildet sind.

Eine erste Ausgestaltung der Fluidaufnahmeanordnung 20, bei der eine erstes Fluidaufnahmekammer 34, ein Fluideinlasskanal 36 und eine zweite Fluidaufnahmekammer 38 als integrales Element ausgebildet sind, ist schematisch in Figur 3 gezeigt. Alternativ können erste Fluidaufnahmekammer 34 und zweite Fluidaufnahmekammer 38 lösbar voneinander ausgebildet sein, wie durch die gestrichelte Linie in Fig. 3 angedeutet, wobei die zweite Fluidaufnahmekammer und der Fluideinlasskanal dann eine Pumpvorrichtung 37 ausbilden, die mit der ersten Fluidaufnahmekammer derart verbindbar ist, dass insgesamt wieder die in Fig. 3 gezeigt Fluidaufnahmeanordnung 20 bereitgestellt ist.

in beiden alternativen Ausgestaltungen - also lösbar oder integral - bildet die Fluidaufnahmeanordnung 20 in ihrer Gesamtheit, wie dargestellt, ein schlauchartiges Element mit einer ersten Seite 30, die zu einer Umgebung abgeschlossen ist und einer zweiten Seite 32, die zur Umgebung offen ausgebildet ist, aus. Dabei kann die schlauchartige Fluidaufnahmeanordnung 20 beispielsweise aus einem flexiblen Kunststoffschlauch hergestellt sein, es ist jedoch auch möglich, dass das schlauchartige Element über zwei miteinander verschweißte Folien hergestellt ist. Als Material kommt vorzugsweise Kunststoff, insbesondere ein luftdichter Kunststoff zum Einsatz, der flexibel und vorzugsweise elastisch ausgebildet ist. Durch die Flexibilität des Kunststoffmaterials kann die Fluidaufnahmeanordnung bzw. ihre Komponenten im fluidunbeaufschlagten Zustand platzsparend zusammengepackt werden.

Eine gewisse Elastizität des Kunststoffs ist ebenfalls vorteilhaft, um ein Platzen des Kunststoffs aufgrund sich verändernder Druckbedingungen, beispielsweise durch Belastung des Dachgepäckträgers oder durch Wärmeausdehnung des in der Fluidaufnahmeanordnung 20 aufgenommenen Fluids sichergestellt werden.

Als Fluid ist insbesondere Luft geeignet, es kann jedoch auch jedes andere Fluid flüssiger oder gasförmiger Form zum Einsatz kommen.

Wie oben erwähnt und in Figur 3 weiterhin gezeigt, weist die Fluidaufnahmeanordnung an ihrer abgeschlossenen Seite 30 die erste Fluidaufnahmekammer 34 auf, die lösbar oder integral über den Fluideinlasskanal 36 mit der zweiten Fluidaufnahmekammer 38 verbunden ist. Die zweite Fluidaufnahmekammer 38 weist eine Öffnung 40 auf, und bildet somit die offene Seite 32 der Fluidaufnahmeanordnung 20.

Dabei können die erste Fluidaufnahmekammer 34, die zweite Fluidaufnahmekammer 38 und der Fluideinlasskanal als integrales oder als einzelne Elemente gefertigt sein. Das heißt, dass beispielsweise der Fluideinlasskanal 36 über stoffschlüssiges Verbinden des Materials der Fluidaufnahmeanordnung 20 hergestellt sein kann. Dies kann beispielsweise mittels Verklebens oder Verschweißens des Kunststoffmaterials erreicht werden.

Alternativ können die zweite Fluidaufnahmekammer 38 und der Fluideinlasskanal 36 als integrale Elemente ausgebildet sind und die Pumpvorrichtung 37 bilden. Die Verbindung mit der ersten Fluidaufnahmekammer 34 erfolgt dann beispielsweise über ein an der ersten Fluidaufnahmekammer 34 ausgebildetes Verbindungselement (nicht dargestellt), das mit dem Fluideinlasskanal 36 der Pumpvorrichtung 37 zusammenwirkt.

Weiterhin ist der Figur 3 zu entnehmen, dass die zweite Fluidaufnahmekammer 38, die zur Umgebung über die Öffnung 40 offen ist, als sogenannter Füllbeutel für die erste Fluidaufnahmekammer 34 dienen kann. Dazu wird umgebendes Fluid, insbesondere beispielsweise Luft, in der zweiten Fluidaufnahmekammer 38 aufgenommen, die zweite Fluidaufnahmekammer 38 an der offenen Seite 32 beispielsweise mittels Einrollens oder Einfaltens des Endes zur Umgebung hin abgeschlossen und dann das in der zweiten Fluidaufnahmekammer 38 aufgenommene Fluid durch den Fluideinlasskanal 36 in die erste Fluidaufnahmekammer 34 gepresst. Ist das Fluid aus der zweiten Fluidaufnahmekammer 38 über den Fluideinlasskanal 36 in der ersten Fluidkammer 34 aufgenommen, wird die Öffnung 40 der zweiten Fluidaufnahmekammer wieder geöffnet, so dass das Umgebungsfluid die nun leere zweite Fluidkammer 38 wieder befüllen kann, worauf der oben beschriebene Prozess wiederholt und somit wiederum Fluid in die erste Fluidaufnahmekammer 34 gelangt.

Um ein Aufnehmen des Umgebungsfluids in die zweite Fluidaufnahmekammer 38 zu erleichtern, sind an der zweiten Fluidaufnahmekammer 38 Versteifungselemente 42 angeordnet, die sowohl am Öffnungsrand 40 als auch am Körper der zweiten Fluidaufnahmekammer 38 angeordnet sein können. Diese Versteifungselemente 42 sorgen dafür, dass im unbelasteten Zustand, also wenn die zweite Fluidaufnahmekammer 38 ohne äußere Einwirkungen ist, die zweite Fluidaufnahmekammer 38 zur Umgebung vollständig geöffnet ist, so dass ein umgebendes Fluid, beispielsweise Luft ungehindert in der zweiten Fluidaufnahmekammer 38 aufgenommen werden kann.

Um diese Fluidaufnahme besonders einfach zu gestalten, ist weiterhin vorgesehen, dass sich die Öffnung 40 über den gesamten Durchmesser der zweiten Fluidaufnahmekammer 38 erstreckt. Dabei kann die zweite Fluidaufnahmekammer 38 einen konstanten Durchmesser D aufweisen, es ist jedoch auch möglich, dass sich die Fluidaufnahmekammer 38 von ihrer einen Seite, die in den Fluideinlasskanal übergeht, zu ihrer anderen Seite mit der Öffnung 40 erweitert, um eine besonders große Öffnung 40 bereitzustellen, so dass mehr und schneller Fluid in die zweite Fluidaufnahmekammer 38 einströmen kann.

Figur 3 zeigt weiterhin, dass der Fluideinlasskanal 36 zum indest zwei, vorzugsweise drei Kanalabschnitte aufweist. Die Variante mit drei Kanalabschnitten ist in Fig. 4 dargestellt. Dabei weist ein erster Kanalabschnitt 36-1 einen im Wesentlichen konstanten Durchmesser D1 auf, während der zweite Kanalabschnitte 36-2 und optional auch der dritte Kanalabschnitt 36-3 (nicht dargestellt) einen variierenden Durchmesser aufweisen kann. So zeigt in dem in Fig. 3 dargestellten Ausführungsbeispiel der in Richtung der zweiten Fluidaufnahmekammer gewandte Kanalabschnitt 36-2 einen sich in Richtung der zweiten Fluidaufnahmekammer 38 vergrößernden Durchmesser D2.

Wichtig bei der Ausgestaltung des Fluideinlasskanals 36 ist, dass eine Länge L des ersten Fluideinlasskanalabschnitts 36-1 und die Öffnungswinkel der zweiten Fluideinlasskanalabschnitte 36-2, beziehungsweise optional der dritten Fluideinlasskanalabschnitte 36-3 (nicht dargestellt), derart dimensioniert sind, dass bei Aufbau eines Drucks in der ersten Fluidaufnahmekammer 34 sich der Fluideinlasskanal 36 selbst verschließt, so dass über die Form des Fluideinlasskanals 36 eine Art Rückschlagventil ausgebildet ist. Dadurch kann ein Fluid, das in der ersten Fluidaufnahmekammer 34 aufgenommen ist, nicht bei Öffnen der zweiten Fluidaufnahmekammer 38 wieder aus der ersten Fluidaufnahmekammer 34 entweicht. Weiterhin kann der Öffnungswinkel des zweiten Fluideinlasskanalabschnitts gleichzeitig in eine sich mit gleichem Winkel erweiternde zweite Fluidaufnahmekammer 38 übergehen.

Figur 4 zeigt ein weiteres Ausführungsbeispiel für eine alternative Form des Fluideinlasskanals 36, bei dem die ersten Fluidaufnahmekammer 34 seitlich des Fluideinlasskanals 36 in einem dritten Fluideinlasskanalabschnitt 36-3 Taschen 46 ausbildet. Diese Taschen 46 unterstützen bei Ausbildung eines im Vergleich zum Umgebungsfluiddruck höheren Fluiddrucks in der ersten Fluidaufnahmekammer 34 das Sich-Selbst-Verschließen des ersten Kanalabschnitts 36-1. Diese Taschen 46 müssen aber nicht in der gezeigten Form ausgebildet sein.

Nach Befüllen der ersten Fluidaufnahmekammer 34 kann die zweite Fluidaufnahmekammer 38 aufgrund des flexiblen Materials zusammengefaltet oder eingerollt werden, und über im Bereich des Fluideinlasskanals 36 angeordnete Verschlusselemente (nicht gezeigt) im geschlossenen Zustand gehalten werden. Dabei können diese Verschlusselemente beispielsweise ein Klettverschluss oder Magnetverschluss oder der oben genannte Rollverschluss sein. Alternativ kann die zweite Fluidaufnahmekammer 28 und der Fluideinlasskanal von der ersten Fluidaufnahmekammer gelöst und separat verstaut werden. Dabei kann dann die erste Fluidkammer 34 mit dem Verschlusselement ausgestattet sein.

Die Fluidaufnahmeanordnung 20 kann nach Befüllen mit Fluid als Ganzes, oder nur teilweise in Form der ersten Fluidaufnahmekammer 34 entweder in der oben beschriebenen Umhüllung 22 aufgenommen werden, oder falls die Fluidaufnahmeanordnung 20 bzw. die erste Fluidaufnahmekammer 34 integral mit der Umhüllung 22 zu dem Tragelement bzw. Auflageelement 2 ausgebildet ist, direkt als Dachgepäckträger 1 verwendet werden. Aufgrund der Flexibilität des Kunststoffmaterials beziehungsweise allgemein des Materials der Fluidaufnahmeanordnung kann sichergestellt werden, dass auch bei großen Belastungen ein Aufplatzen der Anordnung verhindert wird.

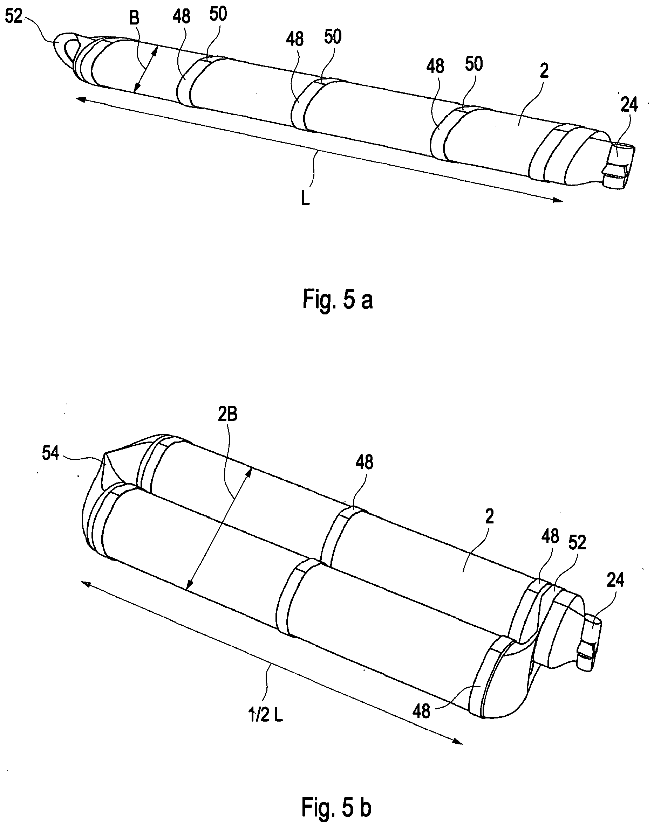

Figur 5 zeigt in zwei Teilfiguren 5a, 5b nochmals eine perspektivische Ansicht eines Ausführungsbeispiels des Tragelements bzw. Auflageelements 2 mit dem Rollverschluss 24 an einem Ende des Tragelements bzw. Auflageelements 2. Weiterhin zeigt Fig. 5, dass an dem Tragelement mehrere jeweils umfänglich um das Tragelement herum angeordnete Befestigungselemente 48 angeordnet sind. Die Befestigungselemente 48 können ebenfalls aus einem Gurtmaterial gefertigt sein. Statt der umfänglichen Anordnung ist auch eine Längsanordnung möglich. Weiterhin ist an den Befestigungselementen mindestens eine Schlaufe 50 ausgebildet an der eine von dem Tragelement bzw. Auflageelement getragenen Ladung gesichert werden kann.

An der dem Rollverschluss 24 gegenüberliegenden Seite, weist das Tragelement 2 weiterhin ein Halteelement 52 auf, das dazu ausgelegt ist mit dem Rollverschluss 24 und/oder dem Tragelement bzw. Auflageelement 2 und/oder einem der Befestigungselemente 48 zusammenzuwirken, um die Gesamtlänge L des Tragelements 2 zu verkürzen bzw. die Auflagefläche B für eine Ladung zu vergrößern. Eine derartige Ausgestaltung ist in Fig. 5b gezeigt, bei der das Halteelement 52 mit dem Tragelement 2 zusammenwirkt und die Länge des Tragelements 2 halbiert (1/2 L), aber seine Auflagefläche (2B) verdoppelt ist. Diese Längen- bzw. Auflagenflächenanpassung kann durch ein Ausbilden einer Abknickung 54 des Tragelements 2 an der gewünschten Stelle erreicht werden.

Alternativ oder zusätzlich können auch die Befestigungselemente 48 selbst dazu ausgebildet sein, als Halteelemente 52 zu fungieren. Dabei ist insbesondere vorteilhaft, wenn die Zusammenwirkung von Halteelement 52 und Befestigungselement 48 bzw. der Befestigungselemente 48 untereinander über einen oder mehrere Klettverschlüsse erfolgt. Dabei stellen die in Fig. 5 gezeigten Befestigungselement 48 diskrete Stellen bereit, an denen eine Verkürzung stattfinden kann. Um eine möglichst gute Anpassung an die entsprechende, gerade gewünschte Ausgestaltung hinsichtlich Länge L bzw. Auflagefläche B zu erreichen kann auch vorgesehen sein, dass die Befestigungselemente 48 frei an dem Tragelement 2 verschiebbar sind, und/oder ein sich über die Länge L des Tragelements 2 erstreckendes Befestigungselement 48 vorgesehen ist, das mit dem Halteelement 52 oder einem anderen Befestigungselement 48 zusammenwirken kann.

Die Befestigungselemente 48 bzw. das Haltelement 52 kann ebenfalls wieder direkt an der als Tragelement 2 ausgebildeten Fluidaufnahmeanordnung 20 bzw. ersten Fluidaufnahmekammer 34, oder an einer die Fluidaufnahmeanordnung 20 bzw. erste Fluidaufnahmekammer 34 aufnehmenden Umhüllung 22 angebracht sein.

Bei einer individuellen Anpassung der Länge bzw. Auflagenfläche ist weiterhin vorteilhaft, wenn für die Anbringung des Gurtbands, mit dem das Tragelement auf einem Fahrzeugdach befestigt wird, ebenfalls mehrere individuelle Stellen vorgesehen sind, bzw. die Befestigung frei wählbar ist. Dabei kann insbesondere vorgesehen sein, dass die Befestigungselemente 48 gleichzeitig als Befestigungselemente für das Gurtband dienen.

Selbstverständlich können beide oben beschriebene alternativen Fluidaufnahmeanordnungen nicht nur bei Dachgepäckträgern zum Einsatz kommen, sondern es sind auch andere Einsatzmöglichkeiten, wie beispielsweise bei oder in aufblasbaren Kissen oder Matratzen möglich.

### Bezugszeichen

- 1: Dachgepäckträger
- 2: Tragelement/Auflageelement
- 4: Fahrzeugdach
- 6: Befestigungsvorrichtung
- 8,9: Gurtband
- 10: Fahrzeuginnenraum
- 12: Verschlusssystem
- 14,16: Feuchtigkeitsstoppelemente
- 20: Fluidaufnahmeanordnung
- 22: Umhüllung
- 24: Rollverschluss
- 26: Rollverschlussschließelemente
- 28: Rollfalz
- 30: geschlossene Seite der Fluidaufnahmeanordnung
- 32: offene Seite der Fluidaufnahmeanordnung
- 34: erste Fluidaufnahmekammer
- 36: Fluideinlasskanal
- 37: Pumpvorrichtung
- 38: zweite Fluidaufnahmekammer
- 40: Öffnung
- 42: Versteifungselement
- 46: Tasche
- 48: Befestigungselement
- 50: Schlaufe
- 52: Halteelement
- 54: Abknickung

- L: Länge
- B: Auflagefläche

## Patentansprüche

1. Fluidaufnahmeanordnung (20) mit einer ersten Fluidaufnahmekammer (34 38), die zu einer Umgebung bis auf einen Fluideinlasskanal (36), über den die erste Fluidaufnahmekammer (34) mit Fluid beaufschlagbar ist, abgeschlossen ist, wobei der Fluideinlasskanal (36) einen geringeren Durchmesser aufweist als die erste Fluidaufnahmekammer (34), und wobei der Fluideinlasskanal (36) fluidisch mit einer zweiten Fluidaufnahmekammer (38) verbunden ist, wobei die erste Fluidaufnahmekammer (34), der Fluideinlasskanal (36) und die zweite Fluidaufnahmekammer (38) als integrales Element ausgebildet sind, und wobei weiterhin der Fluideinlasskanal (36) einen ersten Kanalabschnitt (36-1) mit konstantem Durchmesser, und einen zweiten Kanalabschnitt (36-2) mit einem sich unter einem Öffnungswinkel in Richtung der zweiten Fluidaufnahmekammer (38) vergrößernden Durchmesser aufweist, wobei der Öffnungswinkel derart definiert ist, dass ein Fluid aus dem zweiten Kanalabschnitt in den ersten Kanalabschnitt leitbar ist, **dadurch gekennzeichnet, dass** die zweite Fluidaufnahmekammer (38) faltbar oder rollbar ist, und an der zweiten Fluidaufnahmekammer (38) Versteifungselemente (42) angeordnet sind, so dass im unbelasteten Zustand die zweite Fluidaufnahmekammer (38) zur Umgebung vollständig geöffnet ist.

2. Fluidaufnahmeanordnung (20) mit einer ersten Fluidaufnahmekammer (34 38) und einer lösbar mit der ersten Fluidaufnahmekammer verbindbaren Pumpvorrichtung, die einen Fluideinlasskanal (36) und eine fluidisch mit dem Fluideinlasskanal verbundenen zweite Fluidaufnahmekammer (38) aufweist, wobei die erste Fluidaufnahmekammer bis auf eine mit dem Fluideinlasskanal verbindbare Fluideinlassstelle zu einer Umgebung, abgeschlossen ist, wobei der Fluideinlasskanal (36) einen geringeren Durchmesser aufweist als die erste Fluidaufnahmekammer (34) und wobei der Fluideinlasskanal (36) einen ersten Kanalabschnitt (36-1) mit konstantem Durchmesser, und einen zweiten Kanalabschnitt (36-2) mit einem sich unter einem Öffnungswinkel in Richtung der zweiten Fluidaufnahmekammer (38) vergrößernden Durchmesser aufweist, wobei der Öffnungswinkel derart definiert ist, dass ein Fluid aus dem zweiten Kanalabschnitt in den ersten Kanalabschnitt leitbar ist, **dadurch gekennzeichnet, dass** die zweite Fluidaufnahmekammer (38) faltbar oder rollbar ist, und an der zweiten Fluidaufnahmekammer (38) Versteifungselemente (42) angeordnet sind, so dass im unbelasteten Zustand die zweite Fluidaufnahmekammer (38) zur Umgebung vollständig geöffnet ist.

3. Fluidaufnahmeanordnung nach Anspruch 1 oder 2, wobei das Versteifungselement (42) als mehrere Einzelelemente ausgebildet ist, die sich um die zweite Fluidaufnahmekammer (38) herum erstrecken, und/oder das Versteifungselement als ein sich kontinuierlich um die zweite Fluidaufnahmekammer (38) herum erstreckende Spirale ausgebildet ist.

4. Fluidaufnahmeanordnung (20) nach einem der vorhergehenden Ansprüche, wobei der Durchmesser und/oder eine Länge des ersten Kanalabschnitts (36-1) derart dimensioniert ist, dass bei Erreichen eines vorbestimmten Fluiddruckunterschieds des Fluids in der ersten Fluidaufnahmekammer (34) zu einem Fluid in der Umgebung und/oder der zweiten Fluidaufnahmekammer (38) ein Rückströmen des Fluids aus der ersten Fluidaufnahmekammer (34) in die zweite Fluidaufnahmekammer (38) verhindert ist.

5. Fluidaufnahmeanordnung (20) nach einem der vorhergehenden Ansprüche, wobei ein Übergangsbereich (36-3) von dem ersten Kanalabschnitt (36-1) in die erste Fluidaufnahmekammer (34) eine bestimmte Geometrie aufweist, die derart dimensioniert ist, dass bei Erreichen eines vorbestimmten Fluiddruckunterschieds des Fluids in der ersten Fluidaufnahmekammer (34) zu einem Fluid in der Umgebung und/oder der zweiten Fluidaufnahmekammer (38) ein Rückströmen des Fluids aus der ersten Fluidaufnahmekammer (34) in die zweite Fluidaufnahmekammer (38) verhindert ist.

6. Fluidaufnahmeanordnung (20) nach Anspruch 5, wobei die Geometrie des Übergangsbereich des Fluideinlasskanals (36) in die erste Fluidaufnahmekammer (34) mindestens eine seitlich am Fluideinlasskanal (36) angeordnete Fluidaufnahmetasche (46) aufweist, die derart ausgebildet ist, dass ein in der Tasche (46) aufgenommenes Fluid einen den Fluideinlasskanal (36) verschließenden Druck auf den Fluideinlasskanal (36) ausübt.

7. Fluidaufnahmeanordnung (20) nach einem der vorhergehenden Ansprüche, wobei die zweite Fluidaufnahmekammer (38) eine Öffnung (40) aufweist, die sich über den gesamten Querschnitt der zweiten Fluidaufnahmekammer (38) erstreckt.

8. Fluidaufnahmeanordnung (20) nach einem der vorhergehenden Ansprüche, wobei die Fluidaufnahmeanordnung (20) aus einem flexiblen Kunststoffmaterial gefertigt ist, und wobei zumindest an der Öffnung (40) der zweiten Fluidaufnahmekammer (34 38) ein, vorzugsweise umfänglich angeordnetes, das flexible Kunststoffmaterial versteifendes Material angeordnet ist.

9. Fluidaufnahmeanordnung (20) nach einem der vorhergehenden Ansprüche, wobei ein Sicherungselement vorgesehen ist, das die zweite Fluidaufnahmekammer (38) in ihrem gefalteten oder gerollten Zustand sichert.

10. Pumpvorrichtung einer Fluidaufnahmeanordnung (20) nach Anspruch 2, oder nach Anspruch 2 und einem der Ansprüche 3 bis 9, zum Befüllen einer ersten Fluidaufnahmekammer mit einem Fluid, wobei die Pumpvorrichtung einen Fluideinlasskanal und eine mit dem Fluideinlasskanal fluidisch verbundene zweite Fluidaufnahmekammer aufweist, und lösbar mit der ersten Fluidaufnahmekammer verbindbar ist.

11. Herstellverfahren für eine Fluidaufnahmeanordnung (20) nach einem der vorhergehenden Ansprüche **gekennzeichnet durch** die Schritte:
- Bereitstellen eines schlauchartigen fluidundurchlässigen Materials, insbesondere eines Kunststofffolienschlauches, mit einem ersten zu einer Umgebung offenen Ende (32) und einem zweiten, optional bereits zu der Umgebung geschlossenen, Ende (30); und
- Ausbilden eines Fluideinlasskanals (36) durch stoffschlüssiges Verbinden, insbesondere Verschweißens oder Verklebens, des Schlauches in einem Bereich zwischen dem zweiten, optional geschlossenen, Ende (30) des Schlauches und dem ersten offenen Ende (32) des Schlauches derart, dass der Fluideinlasskanal (36) einen ersten Kanalabschnitt (36-1) mit konstantem Durchmesser, und einen zweiten Kanalabschnitt (36-2) mit einem sich in Richtung des ersten offenen Endes (32) des Schlauches vergrößernden Durchmesser aufweist.

12. Dachgepäckträger (1) für ein Fahrzeug mit zumindest einer Befestigungsvorrichtung (6) für eine Befestigung des Dachgepäckträgers (1) auf einem Fahrzeugdach (4) und zumindest einem Tragelement (2), das auf dem Fahrzeugdach (4) anordenbar ist, **dadurch gekennzeichnet, dass** das Tragelement (2) mindestens eine Fluidaufnahmeanordnung (20) nach Anspruch 1 oder Anspruch 1 und einem der Ansprüche 3 bis 9, oder eine erste Fluidaufnahmekammer einer Fluidaufnahmeanordnung nach Anspruch 2 oder Anspruch 2 und einem der Ansprüche 3 bis 9, aufweist.

13. Dachgepäckträger (1) nach Anspruch 12, wobei die Befestigungsvorrichtung (6) an dem Tragelement (2) befestigt ist, in einen Innenraum (10) des Fahrzeugs führbar ist und lösbar miteinander verbindbar ist, so dass das Tragelement (2) auf dem Fahrzeugdach (4) aufliegt.

14. Dachgepäckträger (1) nach einem der Ansprüche 12 bis 13, wobei das Tragelement (2) und die Fluidaufnahmeanordnung (20) oder die erste Fluidaufnahmekammer (34) integral als ein Element ausgebildet sind, wobei vorzugsweise, das Tragelement (2) aus einem fluidundurchlässigen Material gefertigt ist.

15. Dachgepäckträger (1) nach einem der Ansprüche 12 bis 14, wobei das Tragelement (2) als mindestens eine in einer Umhüllung (22) aufgenommene Fluidaufnahmeanordnung (20) oder mindestens eine in einer Umhüllung (22) aufgenommene erste Fluidaufnahmekammer (34) ausgebildet ist, wobei an der Umhüllung (22) die Befestigungsvorrichtung (6) angebracht ist, wobei vorzugsweise die Umhüllung (22) aus einem verstärkten Kunststoffmaterial, insbesondere aus einem Nylonmaterial oder Polyestermaterial, ausgebildet ist.

## Claims

1. Fluid-receiving arrangement (20) having a first fluid-receiving chamber (34, 38), which is sealed off with respect to an environment apart from a fluid inlet duct (36) via which the first fluid-receiving chamber (34) can be loaded with fluid, the fluid inlet duct (36) having a lower diameter than the first fluid-receiving chamber (34) and the fluid inlet chamber (36) being fluidically connected to a second fluid-receiving chamber (38), the first fluid-receiving chamber (34), the fluid inlet duct (36) and the second fluid-receiving chamber (38) being formed as an integral element, and the fluid inlet duct (36) further having a first duct portion (36-1) of constant diameter and a second duct portion (36-2) of a diameter increasing at an opening angle in the direction of the second fluid-receiving chamber (38), the opening angle being defined in such a way that a fluid can be passed from the second duct portion into the first duct portion, **characterised in that** the second fluid-receiving chamber (38) can be folded up or rolled up and reinforcing elements (42) are arranged on the second fluid-receiving chamber (38) in such a way that in the unloaded state the second fluid-receiving chamber (38) is fully open with respect to the environment.

2. Fluid-receiving arrangement (20) having a first fluid-receiving chamber (34, 38) and a pump device, which is detachably connectable to the first fluid-receiving chamber and which has a fluid inlet duct (36) and a second fluid-receiving chamber (38) fluidically connected to the fluid inlet duct, the first fluid-receiving chamber being sealed off from an environment apart from a fluid inlet point connectable to the fluid inlet duct, the fluid inlet duct (36) having a lower diameter than the first fluid-receiving duct (34), and the fluid inlet duct (36) having a first duct portion (36-1) of a constant diameter and a second duct portion (36-2) of a diameter increasing at an opening angle in the direction of the second fluid-receiving chamber (38), the opening angle being defined in such a way that a fluid can be passed from the second duct portion into the first duct portion, **characterised in that** the second fluid-receiving chamber (38) can be folded up or rolled up and reinforcing elements (42) are arranged on the second fluid-receiving chamber (38) in such a way that in the unloaded state the second fluid-receiving chamber (38) is fully open with respect to the environment.

3. Fluid-receiving chamber according to either claim 1 or claim 2, wherein the reinforcing element (42) is formed as a plurality of individual elements which extend around the second fluid-receiving chamber (38), and/or the reinforcing element is formed as a spiral extending continuously around the second fluid-receiving chamber (38).

4. Fluid-receiving arrangement (20) according to any of the preceding claims, wherein the diameter and/or a length of the first duct portion (36-1) is dimensioned in such a way that when a predetermined fluid pressure difference of the fluid in the first fluid-receiving chamber (34) with respect to a fluid in the environment and/or the second fluid chamber (38) is achieved, the fluid is prevented from flowing back out of the first fluid-receiving chamber (34) into the second fluid-receiving chamber (38).

5. Fluid-receiving arrangement (20) according to any of the preceding claims, wherein a transition region (36-3) from the first duct portion (36-1) into the first fluid-receiving chamber (34) is of a particular geometry, which is dimensioned in such a way that when a predetermined fluid pressure difference of the fluid in the first fluid-receiving chamber (34) with respect to a fluid in the environment and/or the second fluid chamber (38) is achieved, the fluid is prevented from flowing back out of the first fluid-receiving chamber (34) into the second fluid-receiving chamber (38).

6. Fluid-receiving arrangement (20) according to claim 5, wherein the geometry of the transition region of the fluid inlet duct (36) into the first fluid-receiving chamber (34) has at least one fluid-receiving pocket (46), which is arranged laterally on the fluid inlet duct (36) and which is formed in such a way that a fluid received in the pocket (46) exerts a pressure, which seals the fluid inlet duct (36), on the fluid inlet duct (36).

7. Fluid-receiving arrangement (20) according to any of the preceding claims, wherein the second fluid-receiving chamber (38) has an opening (40) which extends over the entire cross section of the second fluid-receiving chamber (38).

8. Fluid-receiving arrangement (20) according to any of the preceding claims, wherein the second fluid-receiving arrangement (20) is made of a flexible plastics material, and wherein a material, preferably arranged peripherally, which reinforces the flexible plastics material is arranged at least at the opening (40) of the second fluid-receiving chamber (34, 38).

9. Fluid-receiving arrangement (20) according to any of the preceding claims, wherein a securing element is provided which secures the second fluid-receiving chamber (38) in the folded or rolled state thereof.

10. Pump device of a fluid-receiving arrangement (20) according to claim 2, or according to claim 2 and any of claims 3 to 9, for filling a first fluid-receiving chamber with a fluid, the pump device having a fluid inlet duct and a second fluid-receiving chamber fluidically connected to the fluid inlet duct, and being detachably connectable to the first fluid-receiving chamber.

11. Method of manufacture for a fluid-receiving arrangement (20) according to any of the preceding claims, **characterised by** the steps of:
- providing a hose-like, fluid-tight material, in particular a plastics material film hose, having a first end (32) which is open with respect to an environment and a second end (30) which is optionally already closed with respect to an environment; and
- forming a fluid inlet duct (36) by materially connecting, in particular welding or gluing, the hose in a region between the second, optionally closed end (30) of the hose and the first, open end (32) of the hose, in such a way that the fluid inlet duct (36) has a first duct portion (36-1) of constant diameter and a second duct portion (36-2) of a diameter increasing at an opening angle in the direction of the first, open end (32) of the hose.

12. Roof rack (1) for a vehicle, having at least one fastening device (6) for fastening the roof rack (1) on a vehicle roof (4) and at least one support element (2) which can be arranged on the vehicle roof (4), **characterised in that** the support element (2) has at least one fluid-receiving arrangement (20), according to claim 1 or claim 1 and any of claims 3 to 9, or a first fluid-receiving chamber of a fluid-receiving arrangement, according to claim 2 or claim 2 and any of claims 3 to 9.

13. Roof rack (1) according to claim 12, wherein the fastening device (6) is fastened on the support element (2), can be guided into an interior (10) of the vehicle, and can be detachably interconnected in such a way that the support element (2) is positioned on the vehicle roof (4).

14. Roof rack (1) according to any of claims 12 to 13, wherein the support element (2) and the fluid-receiving arrangement (20) or the first fluid receiving chamber (34) are formed integrally as an element, the support element (2) preferably being made of a fluid-tight material.

15. Roof rack (1) according to any of claims 12 to 14, wherein the support element (2) is formed as at least one fluid-receiving arrangement (20) received in a cover (22) or at least one first fluid-receiving chamber (34) received in a cover (22), the fastening device (6) being attached to the cover (22), the cover (22) preferably being formed from a reinforced plastics material, in particular from a nylon material or polyester material.

## Revendications

1. Agencement de réception de fluide (20) comprenant une première chambre de réception de fluide (34 38) qui est fermée par rapport à un environnement à l'exception d'un canal d'entrée de fluide (36) à travers lequel la première chambre de réception de fluide (34) peut être alimentée en fluide, dans lequel le canal d'entrée de fluide (36) présente un diamètre plus petit que la première chambre de réception de fluide (34) et dans lequel le canal d'entrée de fluide (36) est relié fluidiquement à une deuxième chambre de réception de fluide (38), dans lequel la première chambre de réception de fluide (34), le canal d'entrée de fluide (36) et la deuxième chambre de réception de fluide (38) sont réalisés sous la forme d'un élément d'un seul tenant et en outre dans lequel le canal d'entrée de fluide (36) présente une première partie de canal (36-1) ayant un diamètre constant, et une deuxième partie de canal (36-2) ayant un diamètre qui augmente selon un angle d'ouverture en direction de la deuxième chambre de réception de fluide (38), dans lequel l'angle d'ouverture est défini de telle sorte que qu'un fluide peut être conduit de la deuxième partie de canal dans la première partie de canal, **caractérisé en ce que** la deuxième chambre de réception de fluide (38) peut être pliée ou roulée et que des éléments de rigidification (42) sont disposés sur la deuxième chambre de réception de fluide (38), de sorte qu'à l'état non chargé la deuxième chambre de réception de fluide (38) est complètement ouverte vers l'environnement.

2. Agencement de réception de fluide (20) comprenant une première chambre de réception de fluide (34 38) et un dispositif de pompage pouvant être relié de manière amovible à la première chambre de réception de fluide, lequel présente un canal d'entrée de fluide (36) et une deuxième chambre de réception de fluide (38) reliée fluidiquement au canal d'entrée de fluide, dans lequel la première chambre de réception de fluide est fermée par rapport à un environnement à l'exception d'un point d'entrée de fluide pouvant être relié au canal d'entrée de fluide, dans lequel le canal d'entrée de fluide (36) présente un diamètre plus petit que la première chambre de réception de fluide (34) et dans lequel le canal d'entrée de fluide (36) présente une première partie de canal (36-1) ayant un diamètre constant et une deuxième partie de canal (36-2) ayant un diamètre qui augmente selon un angle d'ouverture en direction de la deuxième chambre de réception de fluide (38), dans lequel l'angle d'ouverture est défini de telle sorte qu'un fluide peut être conduit de la deuxième partie de canal dans la première partie de canal, **caractérisé en ce que** la deuxième chambre de réception de fluide (38) peut être pliée ou roulée et que des éléments de rigidification (42) sont disposés sur la deuxième chambre de réception de fluide (38), de sorte qu'à l'état non chargé la deuxième chambre de réception de fluide (38) est complètement ouverte vers l'environnement.

3. Agencement de réception de fluide selon la revendication 1 ou 2, dans lequel l'élément de rigidification (42) est réalisé sous la forme de plusieurs éléments individuels qui s'étendent autour de la deuxième chambre de réception de fluide (38), et/ou l'élément de rigidification est réalisé sous la forme d'une spirale qui s'étend de manière continue autour de la deuxième chambre de réception de fluide (38).

4. Agencement de réception de fluide (20) selon l'une des revendications précédentes, dans lequel le diamètre et/ou une longueur de la première partie de canal (36-1) sont dimensionnés de telle sorte que, lorsqu'une différence de pression de fluide prédéterminée du fluide dans la première chambre de réception de fluide (34) par rapport à un fluide dans l'environnement et/ou la deuxième chambre de réception de fluide (38) est atteinte, un reflux du fluide de la première chambre de réception de fluide (34) dans la deuxième chambre de réception de fluide (38) est empêché.

5. Agencement de réception de fluide (20) selon l'une des revendications précédentes, dans lequel une zone de transition (36-3) de la première partie de canal (36-1) vers la première chambre de réception de fluide (34) présente une géométrie déterminée qui est dimensionnée de telle sorte que, lorsqu'une différence de pression de fluide prédéterminée du fluide dans la première chambre de réception de fluide (34) par rapport à un fluide dans l'environnement et/ou la deuxième chambre de réception de fluide (38) est atteinte, un reflux du fluide de la première chambre de réception de fluide (34) dans la deuxième chambre de réception de fluide (38) est empêché.

6. Agencement de réception de fluide (20) selon la revendication 5, dans lequel la géométrie de la zone de transition du canal d'entrée de fluide (36) vers la première chambre de réception de fluide (34) présente au moins une poche de réception de fluide (46) disposée latéralement au canal d'entrée de fluide (36) et formée de telle sorte qu'un fluide reçu dans la poche (46) exerce sur le canal d'entrée de fluide (36) une pression qui ferme le canal d'entrée de fluide (36).

7. Agencement de réception de fluide (20) selon l'une des revendications précédentes, dans lequel la deuxième chambre de réception de fluide (38) présente une ouverture (40) qui s'étend sur toute la section transversale de la deuxième chambre de réception de fluide (38).

8. Agencement de réception de fluide (20) selon l'une des revendications précédentes, dans lequel l'agencement de réception de fluide (20) est constitué d'une matière plastique souple et dans lequel, au moins au niveau de l'ouverture (40) de la deuxième chambre de réception de fluide (34 38), est disposé un matériau, de préférence disposé circonférentiellement, qui rigidifie la matière plastique souple.

9. Agencement de réception de fluide (20) selon l'une des revendications précédentes, dans lequel il est prévu un élément de maintien qui maintient la deuxième chambre de réception de fluide (38) dans son état plié ou roulé.

10. Dispositif de pompage d'un agencement de réception de fluide (20) selon la revendication 2, ou selon la revendication 2 et l'une des revendications 3 à 9, pour remplir une première chambre de réception de fluide avec un fluide, dans lequel le dispositif de pompage présente un canal d'entrée de fluide et une deuxième chambre de réception de fluide reliée fluidiquement au canal d'entrée de fluide, et peut être relié de manière amovible à la première chambre de réception de fluide.

11. Procédé de fabrication d'un agencement de réception de fluide (20) selon l'une des revendications précédentes, **caractérisé par** les étapes consistant à :
- fournir un matériau tubulaire imperméable aux fluides, en particulier un tuyau en film plastique, ayant une première extrémité (32) ouverte vers un environnement et une deuxième extrémité (30), éventuellement déjà fermée par rapport à l'environnement ; et
- former un canal d'entrée de fluide (36) en reliant par liaison de matières, en particulier par soudage ou collage, le tuyau dans une zone située entre la deuxième extrémité (30) du tuyau, éventuellement fermée, et la première extrémité ouverte (32) du tuyau de telle sorte que le canal d'entrée de fluide (36) présente une première partie de canal (36-1) ayant un diamètre constant et une deuxième partie de canal (36-2) ayant un diamètre qui augmente en direction de la première extrémité ouverte (32) du tuyau.

12. Galerie de toit (1) pour un véhicule, comprenant au moins un dispositif de fixation (6) pour fixer la galerie de toit (1) sur un toit de véhicule (4) et au moins un élément de support (2) pouvant être disposé sur le toit de véhicule (4), **caractérisée en ce que** l'élément de support (2) présente au moins un agencement de réception de fluide (20) selon la revendication 1 ou la revendication 1 et l'une des revendications 3 à 9, ou une première chambre de réception de fluide d'un agencement de réception de fluide selon la revendication 2 ou la revendication 2 et l'une des revendications 3 à 9.

13. Galerie de toit (1) selon la revendication 12, dans laquelle le dispositif de fixation (6) est fixé à l'élément de support (2), peut être guidé dans un habitacle (10) du véhicule et être attaché de manière amovible de telle sorte que l'élément de support (2) repose sur le toit de véhicule (4).

14. Galerie de toit (1) selon l'une des revendications 12 à 13, dans laquelle l'élément de support (2) et l'agencement de réception de fluide (20) ou la première chambre de réception de fluide (34) sont réalisés d'un seul tenant sous la forme d'un élément, dans laquelle, de préférence, l'élément de support (2) est constitué d'un matériau imperméable aux fluides.

15. Galerie de toit (1) selon l'une des revendications 12 à 14, dans laquelle l'élément de support (2) est réalisé sous la forme d'au moins un agencement de réception de fluide (20) reçu dans une enveloppe (22) ou d'au moins une première chambre de réception de fluide (34) reçue dans une enveloppe (22), dans laquelle le dispositif de fixation (6) est fixé à l'enveloppe (22), dans laquelle, de préférence, l'enveloppe (22) est formée d'une matière plastique renforcée, en particulier d'un matériau en nylon ou en polyester.
